# EUROPÄISCHE PATENTSCHRIFT

(11) **EP 1 502 246 B1**
(45) Veröffentlichungstag und Bekanntmachung des Hinweises auf die Patenterteilung: **02.08.2006**
(21) Anmeldenummer: 03729838.7
(22) Anmeldetag: 16.04.2003
(51) Int. Cl.: G08G 1/16

(54) **VERFAHREN UND VORRICHTUNG ZUR FAHRERINFORMATION BZW. ZUR REAKTION BEI VERLASSEN DER FAHRSPUR**
METHOD AND DEVICE FOR INFORMING A DRIVER OR FOR REACTING WHEN THE VEHICLE LEAVES A LANE
PROCEDE ET DISPOSITIF DE REACTION OU D'INFORMATION DU CONDUCTEUR DANS LE CAS OU LE VEHICULE QUITTE LA VOIE

(30) Priorität: 30.04.2002 DE 10219494; 17.03.2003 DE 10311518
(43) Veröffentlichungstag der Anmeldung: 02.02.2005
(73) Patentinhaber: ROBERT BOSCH GMBH, 70442 Stuttgart (DE)
(72) Erfinder: MAASS, Alexander, 71229 Leonberg (DE)
(86) Internationale Anmeldenummer: PCT/DE2003/001274
(87) Internationale Veröffentlichungsnummer: WO 2003/094130

(56) Entgegenhaltungen:
- EP-A- 1 074 430
- WO-A-00/54008
- US-A- 4 348 652
- US-A- 5 225 827
- US-A- 5 521 579
- US-A- 5 982 278

## Beschreibung

### Stand der Technik

Die Erfindung betrifft ein Verfahren und eine Vorrichtung zur Fahrerinformation bzw. Reaktion bei Verlassen der Fahrspur, genauer bei drohendem Verlassen der Fahrspur.

Warnsysteme, welche den Fahrer bei Verlassen der Fahrspur bzw. bei drohendem Verlassen der Fahrspur warnen, sind im Stand der Technik bekannt. Beispielsweise zeigt die EP 1 074 430 A1 eine Vorgehensweise, bei welcher aufgrund von Bildsensorsystemen die Fahrspur, auf der sich ein Fahrzeug bewegt, ermittelt wird und der Fahrer gewarnt wird, wenn das Fahrzeug diese Fahrspur verlässt bzw. zu verlassen droht. Hinweise auf die genauen Randbedingungen, unter denen eine derartige Warnung erfolgt, werden jedoch nicht angegeben.

Die WO-A-0054008 Zeigt eine Vorausberechnung der Bahn eines Fahrzeugs, um Kollisionen zu erkennen bzw. zu vermeiden.

### Vorteile der Erfindung

Durch die Berücksichtigung zukünftiger Korrekturen der Bahn des Fahrzeugs durch den Fahrer bei der Ermittlung, ob wegen eines zukünftigen Verlassens der Fahrbahn der Fahrer gewarnt werden soll oder nicht, ermöglicht es, Fehlwarnungen wirksam zu vermeiden und dennoch die gewünschte Zuverlässigkeit der Warnung bei Auftreten der entsprechenden Verkehrssituation beizubehalten.

Damit ist es möglich, auf besonders genaue und zuverlässige Art das zukünftige Verlassen der Fahrspur zu erkennen. Durch diese Tatsache und die Unterdrückung von Fehlwarnungen steigert sich die Betriebsfreundlichkeit und die Akzeptanz eines Fahrassistenzsystems, bei welchem der Fahrer bei Verlassen bzw. zukünftigem Verlassen der Fahrspur durch das Fahrzeug gewarnt wird, bzw. Reaktionen eingeleitet werden, die das Fahrzeug wieder auf seine normale Fahrspur führen (beispielsweise Lenkeingriff).

In besonders vorteilhafter Weise wird bei der Schätzung der zukünftigen Bahn des Fahrzeugs zukünftige Korrekturen der Bahn durch den Fahrer, in einer Ausführung einschließlich seiner Reaktionszeit, berücksichtigt. Dies führt zu einer weiteren Verbesserung von Genauigkeit und Zuverlässigkeit des Systems.

Eine besonders einfache Realisierung besteht darin, dass ein durchschnittlicher Wert für die Korrekturniaßnahmen des Fahrers, z.B. ein Lenkwinkelwert oder ein Querbeschleunigungswert vorgegeben wird und bei der Bahnbestimmung berücksichtigt wird.

Vorteilhaft ist ferner, dass der Aufmerksamkeitszustand des Fahrers bei der Größe eines solchen vorgegebenen Wertes berücksichtigt wird.

Besonders vorteilhaft ist, dass bei der Berechnung der zukünftigen Bahn des Fahrzeugs, die zur Warnung des Fahrers bei Verlassen Fahrspur herangezogen wird, der Aufmerksamkeitszustand des Fahrers derart berücksichtigt wird, dass das Verhalten des Fahrers in der Vergangenheit ermittelt wird und bei einem Verhalten, welches auf einen unaufmerksamen Fahrer schließen lässt, die mögliche zukünftige Bahn des Fahrzeugs mit geringerer Änderung der Krümmung gerechnet wird als bei einem vermuteten aufinerksamen Fahrer. Besonders vorteilhaft ist, die Lenkbewegungen oder Gierratenänderungen in der Vergangenheit zur Abschätzung des Aufmerksamkeitsgrades des Fahrers heranzuziehen. Geringe Lenkbewegungen sprechen für einen unaufmerksamen Fahrer, stärkere Lenkbewegungen für einen Aufmerksamen.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert.
Figur 1 zeigt dabei ein Blockschaltbild einer Vorrichtung zur Fahrerwarnung bzw. zur Reaktion bei drohendem Verlassen der Fahrspur durch das Fahrzeug.
In Figur 2 ist ein Flussdiagramm skizziert, in welchem eine erste Vorgehensweise zur Bestimmung der Fahrerwarnung dargestellt ist. Diese ist anhand der Skizzen der Figur 3 verdeutlicht.
Figur 4 zeigt ein Flussdiagramm für ein zweites Ausführungsbeispiel, dessen Funktionsweise anhand der Darstellung in Figur 5 verdeutlicht ist.
Die Figuren 6 und 7 zeigen ein Ausführungsbeispiel, bei welchem die Berechnung der möglichen zukünftigen Bahn des Fahrzeugs vom Aufinerksamkeitsgrad des Fahrers abhängig ist, wobei in Figur 6 die Situation für einen aufmerksamen Fahrer, in Figur 7 für einen unaufmerksamen Fahrer dargestellt ist.

### Beschreibung von Ausführungsbeispielen

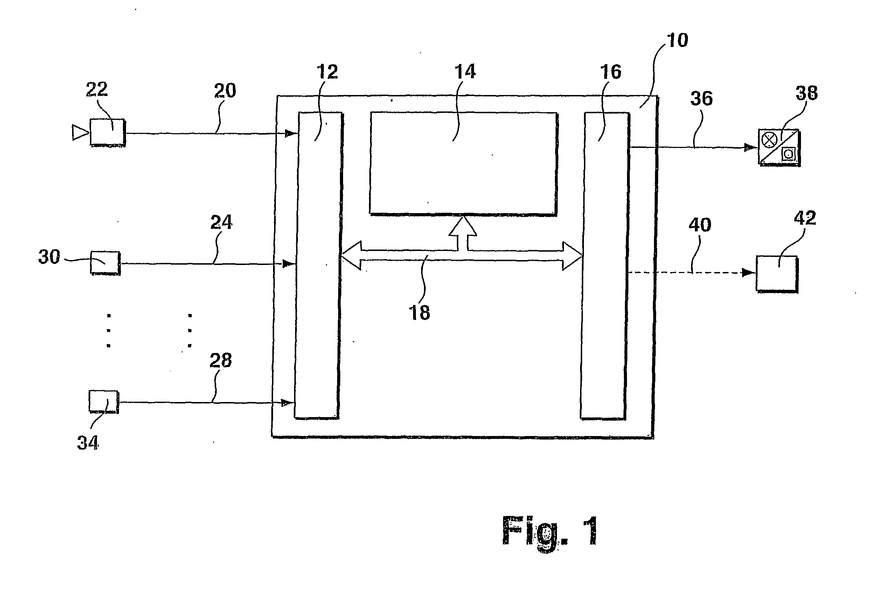

Figur 1 zeigt eine Vorrichtung, welche zur Warnung des Fahrers bzw. zur Reaktion bei zukünftigem Verlassen der Fahrspur des Fahrzeugs dient. Gezeigt ist eine Steuer- bzw. Auswerteeinheit 10, welche eine Eingangsschaltung 12, einen Mikrocomputer 14 sowie eine Ausgangsschaltung 16 aufweist. Diese Elemente sind mit einem Bussystem zum gegenseitigen Datenaustausch miteinander verbunden. Der Eingangsschaltung 12 werden Eingangsleitungen von verschiedenen Messeinrichtungen zugeführt, über die Messsignale bzw. Messinformationen übermittelt werden. Eine erste Eingangsleitung 20 verbindet die Eingangsschaltung 12 mit einem Bildsensorsystem 22, welches die Szene vor dem Fahrzeug aufnimmt. Entsprechende Bilddaten werden über die Eingangsleitung 20 übermittelt. Ferner sind Eingangsleitungen 24 bis 28 vorgesehen, welche die Eingangsschaltung 12 mit Messeinrichtungen 30 bis 34 verbinden. Bei diesen Messeinrichtungen handelt es sich beispielsweise um Messeinrichtungen zur Messung der Fahrzeuggeschwindigkeit, zur Erfassung des Lenkwinkels, sowie zur Erfassung weiterer Betriebsgrößen des Fahrzeugs, welche im Zusammenhang mit der nachfolgend beschriebenen Vorgehensweise Bedeutung haben. Über die Ausgangsschaltung 16 und die Ausgangsleitung 36 wird wenigstens eine Warneinrichtung 38 angesteuert, beispielsweise eine Warnlampe und/oder ein Lautsprecher für eine akustische Warnung oder für eine Sprachausgabe und/oder ein Display für die Anzeige eines Bildes, mit deren Hilfe der Fahrer vor dem zu befürchtenden Verlassen der Fahrspur nach Maßgabe der nachfolgend dargestellten Vorgehensweise informiert bzw. gewarnt wird. Darüber hinaus oder alternativ dazu ist in einigen Ausführungsbeispielen vorgesehen, über die Ausgangsschaltung 16 und eine Ausgangsleitung 40 ein Stellsystem 42 anzusteuern, welches automatisch beispielsweise durch Eingriff in die Lenkung des Fahrzeugs das Fahrzeug wieder in die Spur zurückführt und so das Verlassen der Fahrspur verhindert.

Eine Warnung bzw. ein Eingriff in die Fahrzeugbewegung findet gemäß der nachfolgend beschriebenen Vorgehensweise dann statt, wenn abgeschätzt wird, dass der Fahrer das Fahrzeug nicht mehr mit normalen Korrekturen in der Spur halten wird. Dazu wird überprüft, ob unter Berücksichtigung normaler Korrekturen des Fahrers, das heißt beispielsweise ein bestimmter Lenkradeinschlag, den der Fahrer üblicherweise zur Bahnkorrektur macht, das Fahrzeug die Randmarkierungen überschreitet oder nicht, Konkret wird die zukünftige Bahn des Fahrzeugs unter Berücksichtigung dieser zu erwartenden Korrekturen durch den Fahrer berechnet, mit den erfassten Randmarkierungen verglichen und eine Warnung ausgegeben, wenn die zukünftige Bahn des Fahrzeugs die Randmarkierung überschreitet. Bei der Bestimmung des Wertes, welcher die zu erwartende Korrektur der Bahn durch den Fahrer repräsentiert, wird in einem ergänzenden Ausführungsbeispiel der Aufmerksamkeitszustand des Fahrers berücksichtigt. Der angenommene Wert ist dabei umso größer (dies entspricht einer stärkeren Korrektur), je aufmerksamer der Fahrer ist bzw. umso kleiner, je unaufinerksamer der Fahrer ist. Die Aufmerksamkeit des Fahrers wird dabei je nach Ausführungsbeispiel aus Lenkradbewegungen, Kopfhaltung, Gaspedalbewegung, etc. abgeleitet.

In einer weiteren Ausführung wird auch die Reaktionszeit des Fahrers im Zusammenhang mit der Erkennung, ob das Fahrzeug zukünftig die Fahrspur verlassen wird, abgeschätzt. Es wird davon ausgegangen, dass der Fahrer mit Beginn einer Warnung eine bestimmte Reaktion ausführen wird. Es hat sich als geeignet erwiesen, diese Reaktion in mehreren Phasen zu untergliedern. In einer ersten Phase (Dauer beispielsweise 0,5 sec) findet keine Veränderung des Lenkwinkels stattfindet (Reaktionszeit des Fahrers auf die Warnung), in einer zweiten Phase, die an die erste Phase angrenzt (Dauer beispielsweise 0,1 sec), führt der Fahrer eine Korrektur weg von der Randmarkierung aus. Z.B. dreht er das Lenkrad um einen bestimmten Winkel (z.B. 10°) in diejenige Richtung, die das Fahrzeug zurück in die Spur bringt. Alternativ hierzu ist wird eine Drehung des Lenkrads abgenommen, so dass eine Kurve mit einer Querbeschleunigung von 2 m/sec² gefahren wird. In einer dritten Phase, die an die zweite Phase angrenzt, erfolgt eine Weiterfahrt mit unverändertem Lenkwinkel, bis sich das Fahrzeug in Richtung der Fahrspurmitte bewegt. Unter Berücksichtigung dieses Verhaltensmusters wird für jeden Zeitpunkt die zukünftige Bahn berechnet, die das Fahrzeug im Falle einer Warnung fahren wird. Aus dieser Größe lässt sich dann der geeignete Zeitpunkt der Warnung ableiten, die genau dann erfolgen muss, wenn die unter Berücksichtigung der Fahrerreaktion berechnete Bahn die entsprechende Spurmarkierung um ein gewünschtes Maß (das auch negativ sein kann) überschreitet. Der Entfernungsbereich, in dem der Vergleich mit den Randmarkierung erfolgt, ist dabei begrenzt (z.B. auf 1 sec). Durch diese Maßnahmen wird sichergestellt, dass der Fahrer in jeder Spurverlassens-Situation nach einer Warnung höchstens nur um ein bestimmtes Maß von der eigenen Fahrspur abkommt.

Alternativ oder ergänzend zur Warnung findet ein Eingriff in die Fahrzeugbewegung, z.B. in die Lenkung, statt, durch den das Fahrzeug in einer wie oben beschriebenen Spurverlassens-Situation wieder auf die Fahrspur zurückführt.

Die oben beschriebenen Vorgehensweisen werden mittels Programmen realisiert, die im Mikrocomputer 14 implementiert sind. Dieser erzeugt mit Hilfe der Programme und nach Maßgabe der zugeführten Eingangssignale die Ausgangssignale zur Warnung / Fahrzeugeingriff. Nachfolgend werden anhand von Flussdiagrammen zwei bevorzugte Ausführungsformen der oben dargestellten Vorgehensweise gezeigt.

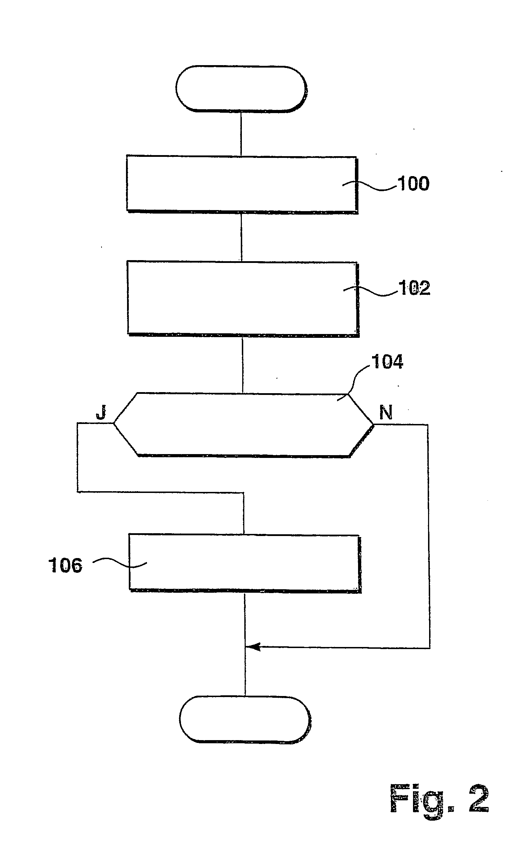

Ein erstes Ausführungsbeispiel ist anhand des Flussdiagramms der Figur 2 beschrieben. Das dargestellte Programm wird dabei zu bestimmten Zeitpunkten durchlaufen.

Im ersten Schritt 100 wird der Verlauf der Spurmarkierung (beispielsweise linker und/oder rechter Fahrspurrand) eingelesen. Der Verlauf der Spurmarkierung wird dabei in einem bevorzugten Ausführungsbeispiel als Polynom, beispielsweise einer Potenzfunktion dritter Ordnung, angegeben. Diese Funktion wird aus den vom Bildsensorsystem ermittelten Bilddaten abgeleitet. Der Mikrocomputer erkennt dabei mittels Objekterkennungsmaßnahmen die Markierungen und berechnet aus den erkannten Markierungen die Parameter der Potenzfunktion. Im darauf folgenden Schritt 102 wird dann die zukünftige Bahn des Fahrzeugs berechnet. Die Darstellung dieser Bahn erfolgt ebenfalls mittels des Funktionstyps, der für den Verlauf der Spurmarkierungen verwendet wird. Entsprechend werden z.B. aus der aktuellen Fahrzeuggeschwindigkeit, dem aktuellen Lenkwinkel oder Querbeschleunigung, etc. die Parameter der Funktion, die den Verlauf wenigstens einer Bahn (Bahn der linken und/oder rechten Fahrzeugkante) des Fahrzeugs berechnet. Eine Weitere Größe, die zur Berechnung der Parameter ausgewertet wird, ist der vorgegebene, vorzugsweise vom Aufmerksamkeitszustand abhängige Korrekturwert, der z.B. durch Korrektur des Lenkwinkel eingearbeitet wird. Im darauf folgenden Schritt 104 werden dann die beiden Funktionen dahingehend überprüft, ob sie sich schneiden bzw. ob die zukünftige Fahrzeugbahn über ein bestimmtes Maß hinaus über dem Verlauf der Randmarkierungen liegt oder ob sich die zukünftige Fahrzeugbahn bis auf ein bestimmtes Maß sich den Randmarkierungen annähert. Der Entfernungsbereich (Entfernung vom Fahrzeug), auf den dieser Vergleich beschränkt ist, ist dabei vorgegeben (z.B. 1 sec) oder durch die maximale Messentfernung des Bildsensorsystems vorgegeben. Wird kein Schnittpunkt ermittelt, so ist davon auszugehen, dass das Fahrzeug in der Spur bleibt, und das Programm wird beendet. Wird jedoch ein Schnittpunkt der beiden Bahnkurven ermittelt so erfolgt gemäß Schritt 106 eine Warnung des Fahrers mit akustischen und/oder optischen Mitteln, in einem Ausführungsbeispiel eine automatische Korrektur der Bahn des Fahrzeugs, beispielsweise durch einen Eingriff in die Lenkung des Fahrzeugs. Danach wird das Programm beendet und zum nächsten Zeitpunkt erneut durchlaufen.

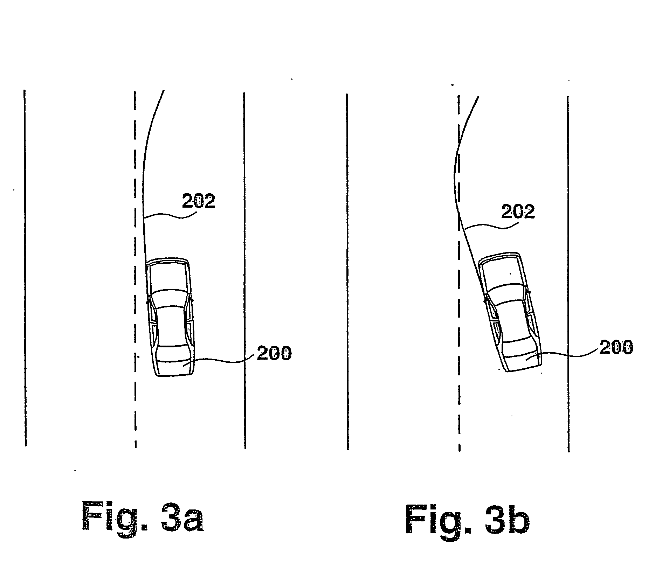

In Figur 3 sind zwei Verkehrssituationen dargestellt, wobei gemäß Figur 3a keine Fahrerwarnung, gemäß Figur 3b eine Fahrerwarnung erfolgt. Die für das Fahrzeug 200 berechnete zukünftige Fahrspur 202, die wie oben dargestellt unter Berücksichtigung möglicher Korrekturen durch den Fahrer (z.B. fester Lenkwinkelwert) bestimmt wird, zeigt in Figur 3a keinen Schnittpunkt mit der gestrichelt dargestellten Randmarkierung, während in Figur 3b ein derartiger Schnittpunkt vorhanden ist. Dem gemäß wird der Fahrer in Figur 3b zum dargestellten Zeitpunkt gewarnt bzw. ein Fahrzeugeingriff vorgenommen, da der Fahrer voraussichtlich alleine durch normale Korrekturen das Fahrzeug nicht in der Spur halten wird, während in Figur 3a eine Warnung unterbleibt, da dem Fahrer dies möglich ist.

Besonders vorteilhaft ist es, wenn das Ausmaß der vorauszusetzenden Korrekturbewegung des Fahrers von seinem Aufmerksamkeitszustand abhängig ist. Bei einem wachsamen Fahrer wird die zu erwartende Korrekturbewegung beispielsweise bei einem Lenkwinkeleinschlag von 10° bzw. einer Querbeschleunigung von 2 m/sek² liegen, während dieser Wert bei einem unaufmerksamen Fahrer deutlich geringer ist. Der Aufmerksamkeitszustand des Fahrers wird beispielsweise aus Lenkbewegungen, Gaspedalbewegungen, Körperhaltung, etc. abgeleitet, dann werden abhängig von dem Aufinerksamkeitsgrad die Korrekturwerte bestimmt und diese bei der Berechnung der zukünftigen Bahn des Fahrzeuges mit einbezogen.

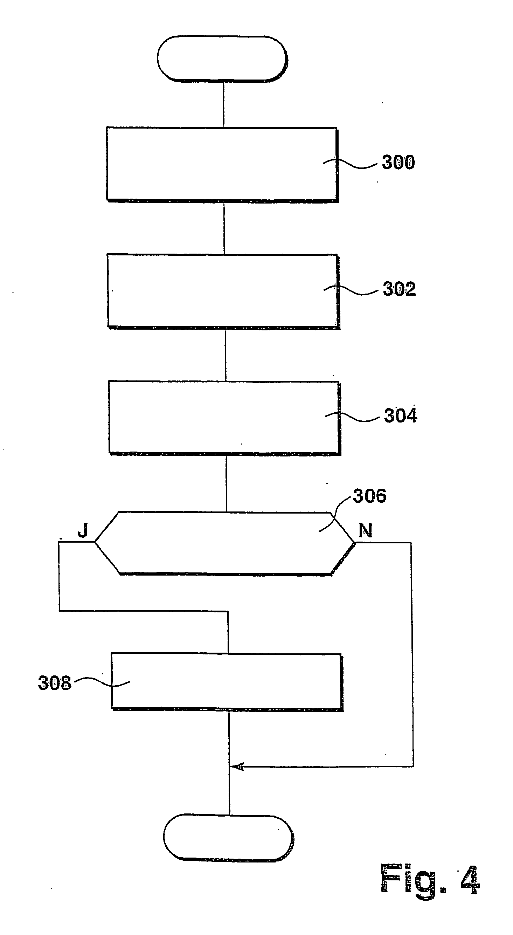

Ein zweites Ausführungsbeispiel, welches Genauigkeit und Zuverlässigkeit der Situationserkennung weiter verbessert, ist im Flussdiagramm der Figur 4 dargestellt. Auch dieses Programm wird in vorgegebenen Zeitintervallen durchlaufen.

Analog zur vorher geschilderten Vorgehensweise wird auch hier in Schritt 300 eine den Verlauf der Spurmarkierung (rechte und/oder linke Seite) anzeigende Funktion eingelesen, die aus den Bilddaten des Bildsensorsystems abgeleitet wurde. Im darauf folgenden Schritt 302 wird für die erste Phase (erster Zeitbereich, erster Entfernungsbereich) eine oder mehrere zukünftige Bahnen des Fahrzeugs (z.B. Bahn der linken Fahrzeugkante und/oder Bahn der rechten Fahrzeugkante) beispielsweise anhand von Fahrzeuggeschwindigkeit und Lenkwinkel und/oder Querbeschleunigung, etc. bestimmt. In dieser Phase wird davon ausgegangen, dass keine Reaktion des Fahrers vorliegt, somit keine Veränderung des Lenkwinkels oder der Querbeschleunigung erfolgt. Es hat sich gezeigt, dass ein Zeitbereich von 0,5 sec als Dauer für diese erste Phase geeignet ist. Die Bahn wird dabei ebenfalls mittels einer Funktionsgleichung dargestellt. In einer bevorzugten Realisierung werden im Schritt 302 auf der Basis der ermittelten Funktion vorgegebene Punkte der Bahn des Fahrzeugs, die z.B. in vorbestimmten Entfernungen liegen, bestimmt, an dem das Fahrzeug zum Ende der ersten Phase sich hinbewegen wird. Entsprechende Bahnpunkte (in entsprechenden Entfernungen) sind bezüglich des Randmarkierungsbereichs ermittelt worden. Danach beginnt die zweite Phase, für deren Dauer sich eine Zeit von 0,1 sec als geeignet erwiesen hat. In dieser Phase reagiert der Fahrer durch Drehen des Lenkrades weg von der Seitenmarkierung. Dabei wird davon ausgegangen, dass zum aktuellen Zeitpunkt eine Warnung erfolgt wäre. Es wird davon ausgegangen, dass das Lenkrad um einen bestimmten Wert gedreht wird, bzw. das Fahrzeug einer Kurve mit einer bestimmten Querbeschleunigung fährt. 10° Lenkwinkel bzw. 2 m/sec² haben sich als geeignete Werte erwiesen. Somit wird im Schritt 304 ausgehend von dem Endpunkt der Bahn der ersten Phase eine Bahn des Fahrzeugs für die zweite Phase bestimmt, wobei eine entsprechende Korrektur des Lenkwinkels und/oder der Querbeschleunigung bei der Bestimmung der Parameter der Funktion berücksichtigt wird. Nach Beendigung der zweiten Phase wird von einer Weiterfahrt mit unverändertem Lenkwinkel ausgegangen, so dass in einem Ausführungsbeispiel (in Figur 4 nicht gezeigt) eine weitere Bahnberechnung stattfindet. Auch in der zweiten und ggf. in der dritten Phasen werden in einer bevorzugten Realisierung einzelne Bahnpunkte in bestimmten Entfernungen berechnet. Nach der Bestimmung der zukünftigen Bahnkurve des Fahrzeugs wird im Schritt 306 überprüft, ob die Funktion des Verlaufs der Spurmarkierung mit den Bahnkurven der ersten oder zweiten Phase Schnittpunkte aufweist. Dies erfolgt durch Auswertung der Funktionsgleichungen oder durch Vergleich der Koordinaten der korrespondierenden Bahnpunkte. Ist dies nicht der Fall, so ist davon auszugehen, dass eine Situation, in der ein Verlassen der Fahrspur durch das Fahrzeug droht, nicht vorhanden ist. Wird jedoch ein Schnittpunkt erkannt, so wird gemäß Schritt 308 eine Warnung optischer und/oder akustischer Art des Fahrers vorgenommen und/oder ein Fahrzeugeingriff durch automatische Korrektur der Lenkung ermittelt und durchgeführt. Danach wird das Programm beendet und zum nächsten Zeitpunkt erneut durchlaufen.

In vorteilhafter Weise kann bei dieser sowie bei der anhand des ersten Ausführungsbeispiels geschilderten Vorgehensweise die Warnlautstärke bei akustischer Warnung variabel und abhängig vom Aufmerksamkeitszustand des Fahrers sein.

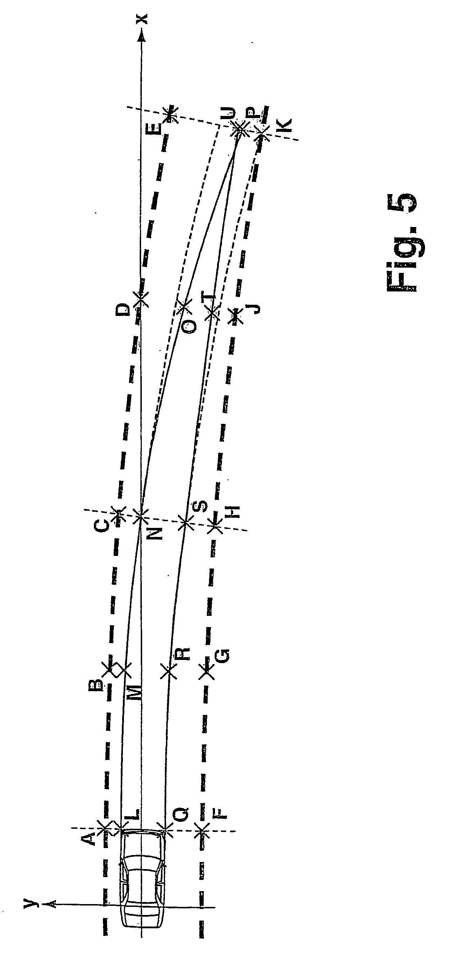

Die Wirkungsweise der in Figur 4 dargestellten Vorgehensweise ist anhand des Schaubildes der Figur 5 verdeutlicht. Eingezeichnet ist ein X/Y-Koordinatensystem, dessen Schwerpunkt z.B. in etwa in Fahrzeugmitte liegt. Das Fahrzeug 400 fährt dabei auf einer Fahrbahn, welche durch die Randmarkierungen 402 und 404 gekennzeichnet ist. Eingetragen sind ferner zwei Bahnen des Fahrzeugs, eine linke und eine rechte (406, 408), die den Verlauf der linken und rechten Fahrzeugkante beschreiben. Wie oben gezeigt wird der Verlauf der linken und rechten Seitenmarkierung (402, 404) relativ zum Fahrzeug durch ein Kamerasystem ermittelt. Der Verlauf der Fahrspurmarkierungen wird dann mittels einer mathematischen Gleichung, vorzugsweise einer Potenzfunktion dritter Ordnung, dargestellt. Auf diese Weise lassen sich die Seitenmarkierungen beispielsweise durch die fünf Punkt A, B, C, D, E für die linke, durch die Punkte F, G, H, J, K für die rechte Seitenmarkierung berechnen. Diese Punkte sind so gewählt, dass sie bei Annahme konstanter Fahrgeschwindigkeit des Fahrzeugs in bestimmten zeitlichen Abständen vor dem Fahrzeug liegen (z.B. A, F 0 sec, B, G 0,025 sec, C, H 0,5 sec, D, J 0,75 sec und E, K 1 sec). Zur Bestimmung der Fahrspuren des Fahrzeugs werden die Bahnen 406, 408 für die linke und rechte Fahrspur des Fahrzeugs ermittelt. Dabei spielen Fahrgeschwindigkeit und aktueller Lenkwinkel und/oder Querbeschleunigung des Fahrzeugs eine Rolle. Es wird angenommen, dass das Fahrzeug zumindest in den nächsten 0,5 sec mit unverändertem Lenkwinkel fährt (Phase 1). Dies entspricht dem Bereich zwischen den Punkten A und C bzw. F und H. Die Fahrspur des Fahrzeugs wird ebenfalls durch eine mathematische Gleichung entsprechend der Darstellung des Verlaufs der Spurmarkierungen dargestellt. Auf diese Weise lassen sich im Bereich der ersten Phase die Punkte L, M, N für die linke, Q, R, S für die rechte Fahrspur bestimmen. Die Gleichungen sind dabei derart berechnet, dass die linke Kante des Fahrzeugs die Kurve von L nach N, die rechte Kante von Q nach S durchfährt. Ferner wird angenommen, dass der Fahrer, wenn er zum gezeigten Zeitpunkt gewarnt werden würde, nach ca. 0,5 sec sein Lenkrad um eine bestimmte Größe (z.B. ca. 10°) in die richtige Richtung drehen wird, um das Spurverlassen zu vermeiden. Auf diese Weise wird in der Phase 2 (Bereich C bis E bzw. H bis K, gestrichelter Bereich in Phase 2) eine neue Kurve mit verändertem Lenkwinkel und/oder Querbeschleunigung bestimmt, die durch die Punkte N, O und P bzw. S, T und U bestimmt sind. Die Bahnpunkte der Fahrzeugbahnen werden dabei für die gleiche Entfernungen berechnet wie die Bahnpunkte der Spurmarkierungen, so dass sich korrespondierende Wertepaare bilden. Danach werden die Kurvenverläufe (rechte Fahrspurkurve mit rechter Seitenrandkurve, linke Fahrspurkurve mit linker Seitenmarkierungskurve) verglichen, ob Schnittpunkte vorliegen oder nicht. Dies erfolgt in der gezeigten Realisierung durch vergleich der Y-Koordinate von korrespondierenden Bahnpunk-ten. Eine Warnung auf der linken Seite erfolgt also, wenn entweder L über A liegt, oder M über B liegt oder N über C liegt oder O über D liegt oder P über E liegt. Entsprechend erfolgt eine Warnung auf der rechten Seite, wenn entweder Q unter F liegt oder R unter G liegt oder S unter H liegt oder T unter J liegt oder U unter K liegt.

Als Alternative hierzu erfolgt die Warnung erst dann, wenn einer der Punkte L bis P um ein bestimmtes Maß über einem der Punkte A bis E liegt, sowie wenn einer der Punkte Q bis U um ein bestimmtes Maß unter einem der Punkte F bis K liegt. Dabei der Wert für das erwähnte Maß auch negativ sein. So dass bereits eine Annäherung an die Spurmarkierung eine Warnung erzeugt. Auf diese Weise werde Toleranzen berücksichtigt.

Die Warnung kann dabei je nach Ausführung auf beiden Fahrzeugseiten oder nur auf einer Fahrzeugseite erfolgen.

Im vorstehend gezeigten Ausführungsbeispiel wird die zukünftige Bahn des Fahrzeugs auf der Basis eines festen vermuteten Lenkradeinschlag des Fahrers berechnet. In der Praxis hat es sich gezeigt, dass es bei einigen Fahrern zu relativ vielen Fehlwarnungen kommt, wenn dieser Fahrer zwischen den Spurmarkierungen hin- und herpendelt.

Daher wird in einem weiteren vorteilhaften Ausführungsbeispiel die Warnschwelle zum Auslösen der Spurverlassenswarnung dynamisch verändert, indem der Aufmerksamkeitsgrad des Fahrers bei der Berechnung der möglichen zukünftigen Bahn des Fahrzeugs berücksichtigt wird. Die Berechnung der zukünftigen Bahn des Fahrzeugs und damit der Warnschwelle zum Auslösen der Warnung wird dabei abhängig vom Verhalten des Fahrers in der nahen Vergangenheit berechnet. Je nachdem wie stark das Fahrzeug durch Lenkbewegungen des Fahrers gekrümmte Bahnen fährt, wird die Berechnung der zukünftigen Bahn des Fahrzeugs und damit die Warnschwelle selbst modifiziert. Dadurch werden bei aufmerksamen Fahrern viele Fehlwarnungen vermieden, dennoch bei unaufmerksamen Fahrern rechtzeitig die Warnungen ausgelöst.

Generell wird im obigen Ausführungsbeispiel eine Warnung ausgelöst, wenn eine linke Warngrenze die linke Spurmarkierung berührt oder die rechte Warngrenze die rechte Spurmarkierung. Die Warngrenze stellt dabei die zukünftige Bahn des Fahrzeugs unter Berücksichtigung einer möglichen geschätzten Lenkkorrektur durch den Fahrer dar, wenn dieser an die jeweilige Spurmarkierung heranfährt. Die zukünftige Bahn des Fahrzeugs und damit die Warngrenze ist daher gekrümmt. Es hat sich gezeigt, dass ein unaufmerksamer Fahrer, der von dem System gewarnt werden soll, in der Regel vor Verlassen der Fahrspur sehr geringe Lenkbewegungen macht. Dadurch fährt das Fahrzeug eine Bahn mit relativ konstanter Krümmung. Wesentlich ist nun, dass im vorliegenden Ausführungsbeispiel immer dann, wenn sich die Krümmung der vom Fahrzeug zurückgelegten Bahn stark geändert hat (d. h. wenn vergleichsweise starke Lenkbewegungen vom Fahrer vorgenommen wurden), die Warngrenzen zusammengezogen werden. Dies bedeutet, dass eine größere Krümmung der zukünftigen Bahn des Fahrzeugs von der Spurmarkierung weg angenommen wird. Bei relativ konstanter Krümmung der zurückgelegten Bahn (und damit bei sehr geringen Lenkbewegungen des Fahrers) werden die Warngrenzen aufgeweitet, das heißt die mögliche zukünftige Bahn des Fahrzeugs wird mit geringerer Änderung der Krümmung gerechnet.

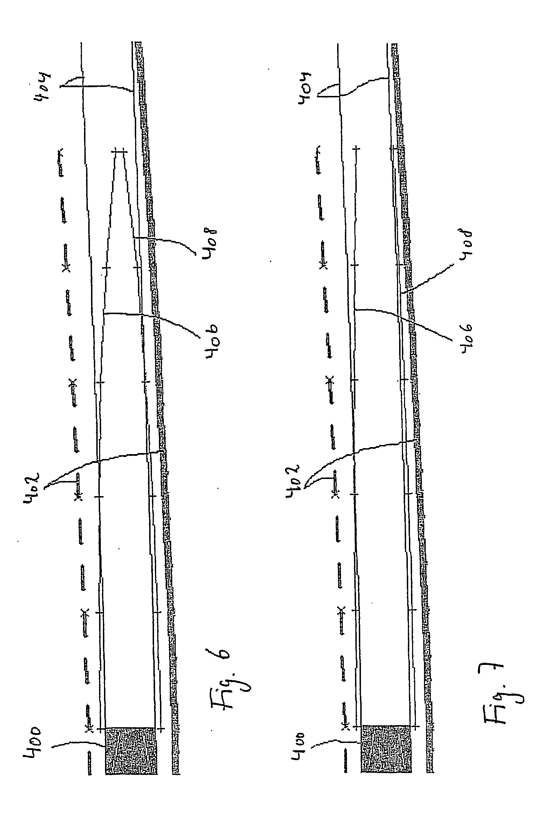

In den Figuren 6 und 7 ist mit 400 das Fahrzeug dargestellt. Ferner sind mit 402 die linke und rechte Spurmarkierung bezeichnet. 404 zeigt den zukünftigen Kurs des Fahrzeugs ohne Berücksichtigung von Lenkradveränderungen, während mit 406 und 408 jeweils der Verlauf der linken und rechten Warngrenze dargestellt ist. Die linke und rechte Warngrenze stellen dabei die zukünftige Bahn des Fahrzeugs unter Berücksichtigung korrigierender Eingriffe des Fahrers dar. Figur 6 zeigt dabei die Situation bei aufmerksamen Fahrer, während in Figur 7 die Situation bei unaufmerksamen Fahrer dargestellt ist. In Figur 6 hat sich somit die Krümmung des Fahrzeugkurses in der Vergangenheit stark verändert. Aus diesem Grunde laufen die Warngrenzen eng zusammen. Mit anderen Worten zeigen die Warngrenzenverläufe eine große Abweichung vom zukünftigen Kurs des Fahrzeugs ohne Lenkkorrektur. Wenn sich das Fahrzeug der rechten oder linken Spurmarkierung nähert, erfolgt eine Warnung erst spät. Anders ist die Situation in Figur 7. In der nahen Vergangenheit hat sich die Krümmung des Fahrzeugkurses kaum verändert, daher liegen die Warngrenzen auch in einer bestimmten Entfernung vor dem Fahrzeug weit auseinander. Hier zeigen die Warngrenzenverläufe also eine kleinere Abweichung vom zukünftigen Kurs des Fahrzeugs ohne Lenkkorrektur. Nähert sich das Fahrzeug weiter einer Spurmarkierung, dann wird frühzeitig eine Warnung ausgelöst.

Realisiert wird dieses Verhalten im bevorzugten Ausführungsbeispiel dadurch, dass anhand von Lenkbewegungen, erfasst beispielsweise aus dem Signal eines Lenkwinkelsensors oder eines Gierratensensors, ein Faktor bestimmt wird, mit denen der vorgegebene Korrekturwert gewichtet wird. Bei der Berechnung der zukünftigen Bahn des Fahrzeugs und damit des Verlaufs der Warngrenzen wird somit bei starken Krümmungen beziehungsweise Lenkbewegungen ein großer Korrekturwert angenommen, welcher zu einer stärkeren Änderung der Krümmung der zukünftigen Bahn und damit zu einem Zusammenziehen der Warngrenzen führt, während bei geringen Lenkbewegungen in der Vergangenheit ein geringerer Krümmungsfaktor angenommen wird und somit die Warngrenzen weit auseinanderliegen. Die Realisierung erfolgt dabei vorzugsweise wie im Falle der vorstehend beschriebenen Ausführungsbeispiele im Rahmen eines Rechnerprogramms.

Das dargestellten Zusammenziehen der Warngrenzen wird nicht nur in Abhängigkeit der Vergangenheit des Fahrzeugkurses vorgenommen, sondern in einem Ausführungsbeispiele alternativ oder zusätzlich auch in Zeiträumen vorgenommen, in denen beispielsweise die Vermessung der Spurmarkierungen besonders unsicher ist. So wird in solchen Situationen ein großer Faktor vorgegeben, der zu einer großen Krümmung der Warngrenzen und somit zu einem Zusammenziehen der Warngrenzen führt. Daher wird bei unsicherer Erfassung von Spurmarkierungen unnötige Signale vermieden.

Neben der Erkennung der Aufmerksamkeit des Fahrers anhand der Krümmung des Fahrzeugkurses in der Vergangenheit beziehungsweise anhand von Lenkbewegungen wird in anderen Ausführungsbeispiele eine anders geartete Aufinerksamkeitserkennung, beispielsweise abgeleitet aus Fahrpedalbewegungen, Kopfhaltung, etc. eingesetzt

## Patentansprüche

1. Verfahren zur Fahrerinformation bzw. zur Reaktion bei Verlassen der Fahrspur, wobei die Fahrerinformation und/oder als Reaktion ein Fahrzeugeingriff erfolgt, wenn das Fahrzeug (400) die Fahrspur zu verlassen droht, wobei wenigstens eine Begrenzung (402) der Fahrspur des Fahrzeugs (400) ermittelt wird, eine zu erwartende Bahn (406, 408) des Fahrzeugs (400) ermittelt wird und aus diesen Größen die Fahrerinformation und/oder der Fahrzeugeingriff abgeleitet wird, **dadurch gekennzeichnet, dass** die Ermittlung der Bahn (406, 408) des Fahrzeugs (400) derart erfolgt, dass eine zukünftig zu erwartende Bahnkorrektur durch den Fahrer berücksichtigt wird.

2. Verfahren nach Anspruch 1, **dadurch gekennzeichnet, dass** die Bahn unter Berücksichtigung einer zukünftigen Lenkreaktion von den Seitenmarkierungen weg ermittelt wird.

3. Verfahren nach einem der vorhergehenden Ansprüche, **dadurch gekennzeichnet, dass** die Reaktionszeit des Fahrers berücksichtigt wird.

4. Verfahren nach einem der vorhergehenden Ansprüche, **dadurch gekennzeichnet, dass** die Seitenbegrenzung mittels eines Bildsensorsystems erfasst wird.

5. Verfahren nach einem der vorhergehenden Ansprüche, **dadurch gekennzeichnet, dass** eine linke zukünftige Bahn des Fahrzeugs sowie eine rechte auktinftige Bahn des Fahrzeugs ermittelt wird, welche mit den linken und rechten Randmarkierungen verglichen werden.

6. Verfahren nach einem der vorhergehenden Ansprüche, **dadurch gekennzeichnet, dass** die Bestimmung der Bahn des Fahrzeugs in einer ersten Phase ohne Lenkkorrektur durch den Fahrer berechnet wird, in einer zweiten Phase mit vorgegebenen Lenkkorrektur.

7. Verfahren nach einem der vorhergehenden Ansprüche, **dadurch gekennzeichnet, dass** ein automatischer Eingriff in die Lenkung erfolgt bei drohendem Verlassen der Fahrspur.

8. Verfahren nach einem der vorhergehenden Ansprüche, **dadurch gekennzeichnet, dass** eine die Aufmerksamkeit des Fahrers repräsentierende Größe ennittelt wird, in deren Abhängigkeit die zukünftige bei der Bahnbestimmung zu berücksichtigende Lenkkorrektur des Fahrers und/oder das Ausmaß der Warnung des Fahrers bestimmt wird.

9. Verfahren nach einem der vorhergehenden Ansprüche, **dadurch gekennzeichnet, dass** die zukünftige mögliche Bahn des Fahrzeugs abhängig von dem Kurs des Fahrzeugs in der Vergangenheit bestimmt wird.

10. Verfahren nach Anspruch 9, **dadurch gekennzeichnet, dass** der Kurs des Fahrzeug in der Vergangenheit aus der Gierrate und/oder des Lenkwinkels und/oder mittels der Lenkbewegungen des Fahrer bestimmt wird.

11. Verfahren nach einem der vorhergehenden Ansprüche, **dadurch gekennzeichnet, dass** die mögliche zukünftige Bahn des Fahrzeugs mit größerer Abweichung gegenüber dem Kurs des Fahrzeugs ohne Lenkeingriff ermittelt wird, wenn sich die Krümmung des Fahrzeugkurses in der Vergangenheit stark ändert, mit geringerer Abweichung berechnet wird, wenn in der Vergangenheit sich die Krümmung des Fahrzeugkurses kaum verändert hat.

12. Verfahren, nach einem der vorhergehenden Ansprüchen, **dadurch gekennzeichnet, dass** eine Fahrerinformation und/oder als Reaktion ein Fahrzeugeingriff erfolgt, wenn das Fahrzeug die Fahrspur zu verlassen droht, wobei wenigstens eine Begrenzung der Fahrspur erfasst wird, eine zu erwartende Bahn des Fahrzeugs ermittelt wird und aus diesen Größen die Fahrerinformation und/oder den Fahrzeugeingriff abgeleitet wird, wobei bei nicht oder nur unzuverlässig erfassten Fahrspurbegrenzung die erwartete Bahn des Fahrzeugs mit größerer Abweichung gegenüber dem Kurs des Fahrzeugs ohne Lenkeingriff ermittelt wird.

13. Vorrichtung zur Fahrerinformation bzw. zur Reaktion bei Verlassen der Fahrspur, mit einer Auswerteeinheit (10), welche bei drohendem Verlassen der Fahrspur eine Warnung des Fahrers und/oder einen Fahrzeugeingriff aktiviert, mit einem Mikrocomputer (14), welcher ein Programm umfasst, welches den Verlauf wenigstens einer Seitenmarkierung der Fahrspur des Fahrzeugs erfasst, welches ferner den zu erwartenden Verlauf der Bahn des Fahrzeugs ermittelt und aus diesen Größen die Warnung und/oder den Fahtzeugeingriff ableitet, **dadurch gekennzeichnet, dass** die Bestimmung der Bahn des Fahrzeugs derart erfolgt, dass eine zu erwartende zukünftige Bahnkorrektur durch den Fahrer berücksichtigt wird.

14. Vorrichtung, nach Anspruch 13, **dadurch gekennzeichnet, dass** eine Fahrerinformation und/oder als Reaktion ein Fahtzeugeingriff erfolgt, wenn das Fahrzeug die Fahrspur zu verlassen droht, wobei wenigstens eine Begrenzung der Fahrspur erfasst wird, eine zu erwartende Bahn des Fahrzeugs ermittelt wird und aus diesen Größen die Fahterinformation und/oder den Fahrzeugeingriff abgeleitet wird, wobei bei nicht oder nur unzuverlässig erfassten Fahrspurbegrenzung die erwartete Bahn des Fahrzeugs mit größerer Abweichung gegenüber dem Kurs des Fahrzeugs ohne Lenkeingriff ermittelt wird.

## Claims

1. Method for informing a driver or for reacting when the vehicle leaves a lane, the driver information and/or a vehicle intervention occurring as a reaction if the vehicle (400) threatens to leave the lane, at least one boundary (402) of the lane of the vehicle (400) being determined, an anticipated path (406, 408) of the vehicle (400) being determined and the driver information and/or the vehicle intervention being derived from these variables, **characterized in that** the path (406, 408) of the vehicle (400) is determined in such a way that a future, anticipated path correction by the driver is taken into account.

2. Method according to Claim 1, **characterized in that** the path is determined taking into account a future steering reaction away from the side markers.

3. Method according to one of the preceding claims, **characterized in that** the reaction time of the driver is taken into account.

4. Method according to one of the preceding claims, **characterized in that** the side boundary is sensed by means of an image sensor system.

5. Method according to one of the preceding claims, **characterized in that** a left-hand future path of the vehicle and a right-hand future path of the vehicle are determined and compared with the left-hand and right-hand edge markers.

6. Method according to one of the preceding claims, **characterized in that** the determination of the path of the vehicle is calculated without a steering correction by the driver in a first phase, and with a predefined steering correction in a second phase.

7. Method according to one of the preceding claims, **characterized in that** an automatic intervention is made in the steering when the vehicle threatens to leave the lane.

8. Method according to one of the preceding claims, **characterized in that** a variable which represents the attentiveness of the driver is determined and the future steering correction of the driver which is to be taken into account during the determination of the path and/or the degree of warning of the driver are determined as a function thereof.

9. Method according to one of the preceding claims, **characterized in that** the future possible path of the vehicle is determined as a function of the course of the vehicle in the past.

10. Method according to Claim 9, **characterized in that** the course of the vehicle in the past is determined from the yaw rate and/or the steering angle and/or by means of the steering movements of the driver.

11. Method according to one of the preceding claims, **characterized in that** the future possible path of the vehicle is determined with a relatively large deviation from the course of the vehicle without a steering intervention if the curvature of the course of the vehicle in the past changes severely, and is calculated with a slight deviation if the curvature of the course of the vehicle has hardly changed in the past.

12. Method according to one of the preceding claims, **characterized in that** the driver is informed and/or a vehicle intervention is carried out as a reaction if the vehicle threatens to leave the lane, at least one boundary of the lane being sensed and an anticipated path of the vehicle being determined and the driver information and/or the vehicle intervention being derived from these variables, the anticipated path of the vehicle being determined with a relatively large deviation with respect to the course of the vehicle without a steering intervention when the boundary of the lane is not sensed or is sensed unreliably.

13. Device for informing the driver or for reacting when the vehicle leaves a lane, having an evaluation unit (10) which activates a warning to the driver and/or a vehicle intervention when the vehicle threatens to leave a lane, having a microcomputer (14) which comprises a program which senses the profile of at least one side marker of the lane of the vehicle and which also determines the anticipated profile of the path of the vehicle and derives the warning and/or the vehicle intervention from these variables, **characterized in that** the path of the vehicle is determined in such a way that an anticipated, future path correction by the driver is taken into account.

14. Device according to Claim 13, **characterized in that** the driver is informed and/or a vehicle intervention is carried out as a reaction if the vehicle threatens to leave the lane, at least one boundary of the lane being sensed, an anticipated path of the vehicle being determined and the driver information and/or the vehicle intervention being derived from these variables, the anticipated path of the vehicle being determined with a relatively large deviation with respect to the course of the vehicle without a steering intervention when the lane boundary is not sensed or is sensed unreliably.

## Revendications

1. Procédé d'information du conducteur ou de réaction dans le cas où le véhicule quitte la voie de circulation, en effectuant l'information du conducteur et/ou comme réaction une intervention du véhicule si le véhicule (400) menace de quitter la voie de circulation, en déterminant au moins une limitation (402) de la voie de circulation du véhicule (400), une trajectoire (406, 408) à suivre par le véhicule (400) et en déduisant de ces grandeurs l'information du conducteur et/ou l'intervention du véhicule,
**caractérisé en ce qu'**
on effectue la détermination de la trajectoire (406, 408) du véhicule (400) pour permettre au conducteur de prendre en compte une future correction de trajectoire à effectuer.

2. Procédé selon la revendication 1,
**caractérisé en ce qu'**
on détermine la trajectoire en tenant compte d'une future réaction de conduite pour s'écarter des marquages latéraux.

3. Procédé selon l'une quelconque des revendications précédentes,
**caractérisé en ce qu'**
on détecte le temps de réaction du conducteur.

4. Procédé selon l'une quelconque des revendications précédentes,
**caractérisé en ce qu'**
on détecte la limitation latérale au moyen d'un système de détection d'image.

5. Procédé selon l'une quelconque des revendications précédentes,
**caractérisé en ce qu'**
on détermine une future trajectoire gauche du véhicule ainsi qu'une future trajectoire droite du véhicule, qui sont comparées avec les marquages latéraux gauches et droits.

6. Procédé selon l'une quelconque des revendications précédentes,
**caractérisé en ce qu'**
la détermination de la trajectoire du véhicule est calculée dans une première phase sans correction de direction par le conducteur, et dans une deuxième phase avec une correction de direction prédéterminée.

7. Procédé selon l'une quelconque des revendications précédentes,
**caractérisé en ce qu'**
une intervention automatique dans la direction est effectuée dans le cas où le véhicule menace de quitter la voie de circulation.

8. Procédé selon l'une quelconque des revendications précédentes,
**caractérisé en ce qu'**
on détermine une grandeur représentant l'attention du conducteur, en fonction de laquelle on détermine la future correction de direction du conducteur à prendre en considération lors de la détermination de la trajectoire et/ou le degré d'avertissement du conducteur.

9. Procédé selon l'une quelconque des revendications précédentes,
**caractérisé en ce qu'**
on détermine la future trajectoire possible du véhicule en fonction du cap du véhicule dans le passé.

10. Procédé selon la revendication 9,
**caractérisé en ce qu'**
on détermine le cap du véhicule dans le passé à partir du taux de lacet et/ou de l'angle de direction et/ou des mouvements de direction du conducteur.

11. Procédé selon l'une quelconque des revendications précédentes,
**caractérisé en ce qu'**
on détermine la future trajectoire possible du véhicule avec un grand écart par rapport au cap du véhicule sans intervention de direction, lorsque la courbure du cap du véhicule dans le passé varie fortement, et on la calcule avec un faible écart, lorsque la courbure du cap du véhicule dans le passé a peu varié.

12. Procédé selon l'une quelconque des revendications précédentes,
**caractérisé en ce qu'**
on effectue une information du conducteur et/ou une intervention du véhicule en réaction si le véhicule menace de quitter la voie de circulation, on saisit au moins une limitation de la voie de circulation, on détermine une trajectoire à suivre par le véhicule et on déduit de ces grandeurs l'information du conducteur et/ou l'intervention du véhicule, et si la limitation de la voie de circulation n'est pas détectée ou n'est détectée que de façon non fiable, la trajectoire à suivre par le véhicule est calculée avec un écart plus important que le cap du véhicule sans intervention de direction.

13. Dispositif d'information du conducteur et/ou de réaction dans le cas où le véhicule quitte la voie de circulation, comprenant une unité d'exploitation (10) qui active un avertissement du conducteur et/ou une intervention du véhicule lorsque le véhicule menace de quitter la voie de circulation, un microordinateur (14) ayant un programme qui détecte le tracé d'au moins un marquage latéral de la voie de circulation du véhicule, qui détermine en outre le tracé à suivre pour la trajectoire du véhicule et qui déduit de ces grandeurs l'avertissement et/ou l'intervention du véhicule,
**caractérisé en ce qu'**
la détermination de la trajectoire du véhicule est effectuée pour que le conducteur tienne compte d'une future correction de trajectoire à effectuer.

14. Dispositif selon la revendication 13,
**caractérisé en ce qu'**
il effectue une information du conducteur et/ou comme réaction une intervention du véhicule si le véhicule menace de quitter la voie de circulation, il saisit au moins une limitation de la voie de circulation, il détermine une trajectoire à suivre par le véhicule et en déduit de ces grandeurs l'information du conducteur et/ou l'intervention du véhicule, et si la limitation de la voie de circulation n'est pas détectée ou n'est détectée que de façon non fiable, il détermine la trajectoire à suivre par le véhicule avec un écart plus important que le cap du véhicule sans intervention de direction.
